# DEMANDE DE BREVET EUROPEEN

(11) **EP 0 605 378 A1**
(43) Date de publication de la demande: **06.07.1994**
(21) Numéro de dépôt: 93870233.9
(22) Date de dépôt: 14.12.1993
(51) Int. Cl.: C21C 5/54, C21B 3/06

(54) **Procédé de valorisation de la scorie de four électrique d'aciére**

(30) Priorité: 22.12.1992 BE 9201124
(71) Demandeur: CENTRE DE RECHERCHES METALLURGIQUES CENTRUM VOOR RESEARCH IN DE METALLURGIE Assoc. sans but lucratif Ver, zonder winstoogmerk, B-1040 Bruxelles (BE)
(72) Inventeur: Piret, Jacques, B-4000 Liege (BE)
(74) Mandataire: Lacasse, Lucien Emile

(57) **Abrégé**

Procédé de valorisation de la scorie de four électrique d'aciérie, qui consiste à ajouter à la scorie, à l'état liquide, un composé porteur de silice et d'alumine ainsi qu'un agent réducteur qui lui confèrent, après réduction des oxydes, une composition voisine de celle du laitier de haut fourneau. Ce composé est de préférence constitué par des cendres volantes, contenant au moins 20 % de carbone imbrûlé. L'agent réducteur utilisé est le carbone sous forme de charbon broyé. On maintient la scorie à l'état liquide et à une température comprise entre 1500°C et 1700°C, au moins partiellement par chauffage à l'arc électrique, éventuellement assisté par un brûleur d'appoint. On peut encore ajouter à la scorie diverses matières finement divisées contenant des oxydes de métaux, telles que des poussières d'aciérie ou de haut fourneau, des pailles de laminoir ou de la scorie LD.

## Description

La présente invention concerne un procédé de valorisation de la scorie de four électrique d'aciérie.

La scorie métallurgique provenant de l'élaboration de l'acier au four électrique n'a à l'heure actuelle pratiquement aucun débouché économique et est dès lors généralement mise au terril.

D'une manière générale, la charge d'un four électrique se compose de ferrailles d'origines diverses, auxquelles on peut ajouter des quantités variables de fonte, liquide ou solide.

Du fait des enfournements habituels dans les fours électriques, la scorie obtenue présente des teneurs en silice et en alumine plus élevées que les scories habituelles des procédés basiques d'affinage à l'oxygène. Leur teneur en chaux est donc moindre et elles sont ainsi plus acides que les scories de type LD. Elles sont dès lors difficilement utilisables pour l'amendement des sols.

La présente invention a pour objet de proposer un procédé de valorisation de la scorie de four électrique, qui permet d'offrir à cette scorie un débouché intéressant en la transformant en une matière utilisable pour la fabrication des ciments de type dit métallurgique.

Conformément à la présente invention, un procédé de valorisation de la scorie de four électrique d'aciérie est caractérisé en ce que l'on ajoute à ladite scorie, à l'état liquide, un composé porteur de silice et d'alumine, en particulier des cendres volantes, ainsi qu'un agent réducteur qui lui confèrent, après réduction des oxydes, une composition voisine de celle du laitier de haut fourneau.

Les cendres volantes seront avantageusement riches en carbone imbrûlé, c'est-à-dire avec une teneur en carbone d'au moins 20 %, et de préférence de l'ordre de 30 %.

L'agent réducteur est destiné à réduire les oxydes de métaux présents dans la scorie, en particulier les oxydes de fer et de manganèse. A cet effet, on utilise de préférence du carbone sous la forme de charbon broyé, qui permet de réduire ces oxydes à l'état métallique et de récupérer ainsi la majeure partie de ces métaux.

Suivant une mise en oeuvre particulière, on ajoute ledit agent réducteur en plusieurs étapes, afin d'assurer respectivement dans chaque étape la réduction d'une partie des oxydes présents dans la scorie, et on soutire une partie de la scorie après chacune desdites étapes de réduction.

La quantité d'agent réducteur ajoutée dans les diverses étapes précitées est déterminée en fonction du degré de réduction à atteindre dans les étapes respectives, c'est-à-dire par la composition de la scorie à soutirer après chaque étape. Cette composition, en particulier la teneur en éléments métalliques, est elle-même fixée par les utilisations envisagées pour la scorie provenant de ces différentes étapes.

Une telle réduction en plusieurs étapes peut être effectuée soit dans un récipient unique, soit dans plusieurs récipients, de préférence successifs, correspondant aux différentes étapes à réaliser.

Pour augmenter la récupération de métaux, on peut ajouter au bain de scorie d'autres matières métalliques oxydées, telles que des pailles de laminoir ou des poussières d'aciérie ou de hauts fourneaux, ou encore d'autres scories riches en fer telles que des scories d'affinage à l'oxygène.

Dans le cadre de la présente invention, le bain de scorie est maintenu à l'état liquide et à une température suffisante pour réaliser la réduction, de préférence entre 1500°C et 1700°C, au moins partiellement par chauffage à l'arc électrique.

Une source de chaleur complémentaire peut être fournie directement au bain de scorie par la combustion d'une partie du carbone réducteur ou d'un autre combustible approprié, éventuellement avec insufflation d'oxygène pur au lieu d'air au voisinage de l'alimentation en carbone ou en combustible, cette opération de combustion étant menée conjointement à la réduction des oxydes métalliques mentionnée plus haut.

De manière connue en soi, la scorie traitée par le procédé de l'invention est ensuite granulée par refroidissement à l'eau en vue de son utilisation dans la fabrication des ciments dits métallurgiques.

## Revendications

1. Procédé de valorisation de la scorie de four électrique d'aciérie, caractérisé en ce que l'on ajoute à ladite scorie, à l'état liquide, un composé porteur de silice et d'alumine ainsi qu'un agent réducteur qui lui confèrent, après réduction des oxydes, une composition voisine de celle du laitier de haut fourneau.

2. Procédé suivant la revendication 1, caractérisé en ce que le composé porteur de silice et d'alumine est constitué par des cendres volantes.

3. Procédé suivant la revendication 2, caractérisé en ce que lesdites cendres volantes contiennent au moins 20 % de carbone imbrûlé.

4. Procédé suivant l'une ou l'autre des revendications 1 à 3, caractérisé en ce que l'agent réducteur utilisé est le carbone sous forme de charbon broyé.

5. Procédé suivant l'une ou l'autre des revendications 1 à 4, caractérisé en ce que l'on maintient la scorie à l'état liquide et à une température suffisante pour réaliser la réduction, au moins partiellement par chauffage à l'arc électrique.

6. Procédé suivant la revendication 5, caractérisé en ce que ladite température est comprise entre 1500°C et 1700°C.

7. Procédé suivant l'une ou l'autre des revendications 1 à 6, caractérisé en ce que l'on ajoute à la scorie des matières finement divisées contenant des oxydes de métaux, en particulier des oxydes de fer.

8. Procédé suivant l'une ou l'autre des revendications 1 à 7, caractérisé en ce que l'on ajoute à ladite scorie au moins une autre scorie riche en fer, telle qu'une scorie d'affinage à l'oxygène.

9. Procédé suivant l'une ou l'autre des revendications 1 à 8, caractérisé en ce que l'on injecte un gaz riche en oxygène, respectivement un agent combustible et un gaz riche en oxygène, dans le bain de scorie et en ce que l'on brûle ainsi une partie de l'agent réducteur au sein du bain de scorie, respectivement ledit agent combustible, pour contribuer au maintien de ladite température du bain de scorie.

10. Procédé suivant l'une ou l'autre des revendications 1 à 9, caractérisé en ce que l'on ajoute ledit agent réducteur en plusieurs étapes afin d'assurer respectivement dans chaque étape la réduction d'une partie des oxydes présents dans la scorie, et en ce que l'on soutire une partie de la scorie après chacune desdites étapes de réduction.
